(19) Europäisches Patentamt
European Patent Office
Office européen des brevets

(11) Veröffentlichungsnummer: **0 084 315**
**B1**

(12) # EUROPÄISCHE PATENTSCHRIFT

(45) Veröffentlichungstag der Patentschrift: **25.09.85**

(51) Int. Cl.⁴: **C 09 B 5/28**, C 07 D 209/82, D 06 P 1/24

(21) Anmeldenummer: **83100019.5**

(22) Anmeldetag: **04.01.83**

(54) **Anthrachinon-Küpenfarbstoffe.**

(30) Priorität: **13.01.82 DE 3200707**

(43) Veröffentlichungstag der Anmeldung: **27.07.83 Patentblatt 83/30**

(45) Bekanntmachung des Hinweises auf die Patenterteilung: **25.09.85 Patentblatt 85/39**

(84) Benannte Vertragsstaaten: **CH DE FR GB IT LI**

(56) Entgegenhaltungen:
**FR - A - 1 553 270**
**US - A - 2 657 221**
**US - A - 2 672 462**

(73) Patentinhaber: **BAYER AG, Konzernverwaltung RP Patentabteilung, D-5090 Leverkusen 1 Bayerwerk (DE)**

(72) Erfinder: **Hohmann, Walter, Dr., Fontanestrasse 17, D-5090 Leverkusen 1 (DE)**
Erfinder: **Stawitz, Josef, Dr., Gerstenkamp 21, D-5000 Köln 80 (DE)**

**EP 0 084 315 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft Nitro-trianthrimid-carbazole der Formel

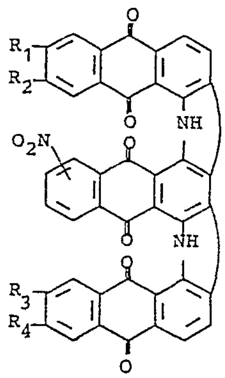

(I)

in der die $NO_2$-Gruppe in α- oder β-Stellung steht und $R_1$, $R_2$, $R_3$, $R_4$ Wasserstoff oder Halogen wie Chlor oder Brom bezeichnen. Halogen steht bevorzugt für Chlor.

Besonders bevorzugt ist die Verbindung, bei der die $NO_2$-Gruppe in α-Stellung steht und $R_1$, $R_2$, $R_3$, $R_4$ Wasserstoff bezeichnen.

Die Erfindung betrifft weiterhin die Verwendung von Verbindungen der Formel (I) als Einzelkomponenten oder in Mischungen als Küpenfarbstoffe.

Bei Verwendung von Verbindungen der Formel (I) als Küpenfarbstoffe kann während der Verküpung die Nitrogruppe zumindest partiell z.B. zur Aminogruppe reduziert werden.

Die Erfindung betrifft weiterhin ein Verfahren zur Herstellung von Verbindungen der Formel (I), das dadurch gekennzeichnet ist, dass man Verbindungen der Formel

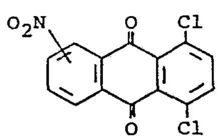

(III)

mit Aminoanthrachinonen der Formeln

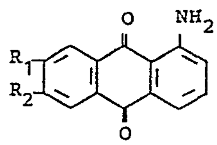

und

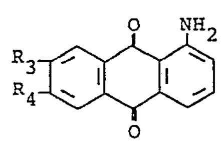

(IVa) (IVb)

in denen $R_1$, $R_2$, $R_3$, $R_4$ die zu Formel (I) angegebenen Bedeutungen besitzen, in einer Anthrimidschmelze umsetzt und man die erhaltenen Trianthrimide in Gegenwart üblicher Verdünnungsmittel vorzugsweise Pyridinen nach an sich bekannten Verfahren carbazoliert. Die Umsetzung von (III) mit (IVa) und (IVb) kann stufenweise erfolgen; aus ökonomischen Gründen empfiehlt es sich jedoch, (III) mit einem Gemisch aus (IVa) und (IVb) umzusetzen.

Verbindungen der Formel (III) sind an sich bekannt.

Sie können nach verschiedenen Verfahren erhalten werden, z.B. nach dem in der DE-AS 1161252 beschriebenen Verfahren oder auch durch Nitrierung von 1,4-Dichloranthrachinon nach an sich bekannten Verfahren (s. z.B. Chem. Zentralblatt 1910 I, S. 2093), wobei zunächst ein Gemisch aus Verbindungen der Formel (III) mit der $NO_2$-Gruppe in α-Stellung (Hauptprodukt) und in β-Stellung (Nebenprodukt) entsteht.

Die bevorzugte, ökonomischere Methode ist jedoch die Chlorierung von 1- oder 2-Nitro-anthrachinon. Dabei treten die Chloratome ganz bevorzugt in die α-Stellungen des unsubstituierten Ringes ein.

Zur Herstellung von 1,4-Dichlor-5-nitro-anthrachinon kann auch rohes, ca. 65 bis 85%iges 1-Nitro-anthrachinon, wie es bei Mononitrierungen von Anthrachinon anfällt, eingesetzt werden. Bevorzugt setzt man aber reines 1-Nitro-anthrachinon ein, wie es z.B. gemäss der DE-OS 2256644 erhältlich ist. Dabei entsteht ein rohes, ca. 70 bis 85%iges Produkt, das bevorzugt zur Herstellung des Nitrotrianthrimids eingesetzt wird. Man kann bei der Herstellung des Nitrotrianthrimids jedoch auch von reinem, beispielsweise 95 bis 98%igem 1,4-Dichlor-5-nitro-anthrachinon ausgehen.

Auch die Verbindungen der Formeln (IVa) und (IVb) sind an sich bekannt. Beispielhaft seien genannt: 1-Amino-6,7-dihalogen-anthrachinone, vorzugsweise 1-Amino-6,7-dichlor-anthrachinon, 1-Amino-6- oder -7-monohalogen-anthrachinone, vorzugsweise 1-Amino-6-chlor- und 1-Amino-7-chlor-anthrachinon, sowie insbesondere 1-Amino-anthrachinon.

Das 1-Amino-anthrachinon kann als rohes Produkt, wie es z.B. durch Reduktion von 65 bis 85%igem Nitro-anthrachinon nach an sich bekannten Verfahren in 60 bis 85%iger Reinheit erhalten wird, eingesetzt werden. Bevorzugt verwendet man ca. 85 bis 90%iges 1-Amino-anthrachinon, ganz besonders bevorzugt ca. 98%iges Produkt.

Die Verbindungen der Formeln (III) und (IVa) + (IVb) werden vorzugsweise im Molverhältnis III: (IVa+IVb) = 1 : 1,8 bis 1 : 2,3, besonders bevorzugt 1 : 2,0 bis 1 : 2,1 eingesetzt.

Das neue Verfahren zeigt einen überraschenden Verlauf insofern, als

a) in der Anthrimidschmelze selektiv und nahezu vollständig die Chloratome gegen Aminoanthrachinon-Gruppen ausgetauscht werden, wobei die Nitrogruppe nicht oder nur in äusserst geringem Umfange substituiert oder verändert wird;

b) bei der Carbazolierung und auch bei der Aufarbeitung, die vorzugsweise im stark alkalischen Medium bei erhöhter Temperatur durchgeführt wird, die Nitrogruppe praktisch vollständig erhalten bleibt.

Als Lösungs- oder Verdünnungsmittel bei der Anthrimidschmelze kommen vorteilhafterweise solche in Frage, welche die Reaktionspartner in hinreichender Menge lösen und unter den Reaktionsbedingungen inert sind, wie Tetralin, Naphthalin, Methylnaphthalin, Diphenyl, Diphenylmethan, Dimethyldiphenyl, Dimethylnaphthalin, Diphenylether und Nitrobenzol. Bevorzugt werden Naphthalin und Nitrobenzol, aus ökonomischen Gründen besonders bevorzugt Nitrobenzol verwendet.

Die Lösungsmittelmenge richtet sich nach der gewählten Verfahrensweise.

So werden bei Durchführung in einem Schaufeltrockner nur Mengen von 0,5 bis 1 Gew.-Teil benötigt oder es kann ganz auf das Lösungsmittel verzichtet werden. Beim Lösungsmittelverfahren in einem Rührwerksbehälter werden vorzugsweise 4 bis 6 Gew.-Teile Lösungsmittel angewendet.

Als Katalysatoren kommen die bei einer Ullmann-Reaktion üblichen Katalysatoren wie Cu-Pulver, CuCl, CuBr, $Cu(OAc)_2$, $CuCl_2$, $CuBr_2$ bzw. Gemische dieser Verbindungen in Betracht. Als alkalisch reagierende Verbindungen zur Neutralisation des bei der Reaktion entstehenden Chlorwasserstoffs finden vorzugsweise Hydroxide und Carbonate der Alkalimetalle sowie Oxide, Hydroxide und Carbonate der Erdalkalimetalle und ihre basischen Salze, besonders bevorzugt $Na_2CO_3$, Verwendung.

Die in das Verfahren eingesetzte Menge der alkalisch reagierenden Verbindungen ist in weiten Grenzen variabel. Bevorzugt werden ca. 2 bis 20, mit Vorteil 2 bis 4 Basenäquivalente pro Mol eingesetztes 1,4-Dichlor-nitro-anthrachinon verwendet. Die Reaktionstemperatur richtet sich nach dem gewählten Verfahren und dem Lösungsmittel. Sie liegt im allgemeinen zwischen 160 und 230° C, besonders beworzugt zwischen 195 und 205° C.

Die Reaktionszeit hängt von der gewählten Reaktionstemperatur ab und liegt bevorzugt zwischen 3 und 30 Stunden, bei der bevorzugten Temperatur zwischen 8 und 12 Stunden.

Die Reaktion lässt sich mit den üblichen chromatographischen Verfahren an der Abnahme der Ausgangsmaterialien leicht verfolgen. Das Reaktionsprodukt darf ohne Nachteil für den Farbstoff je nach der Qualität des eingesetzten 1,4-Dichlor-nitro-anthrachinons noch 0,2 bis 1,5% Restchlor und 2 bis 5% 1-Amino-anthrachinon enthalten.

Die Aufarbeitung erfolgt nach an sich bekannten Verfahren, beispielsweise durch Abdestillieren des Lösungsmittels, gegebenenfalls unter vermindertem Druck, durch Wasserdampfdestillation oder durch Filtration, gegebenenfalls nach vorherigem Verdünnen mit einem geeigneten Lösungsmittel. Zum Verdünnen kommen insbesondere solche Lösungsmittel in Betracht, die sich mit den für die Reaktion verwendeten Lösungsmitteln mischen und im allgemeinen solche, die einen niedrigen Siedepunkt besitzen. Insbesondere seien Alkohole mit 1 bis 5 C-Atomen, Kohlenwasserstoffe mit 5 bis 10 C-Atomen wie Toluol, sowie halogenierte Kohlenwasserstoffe genannt.

Zur Carbazolierung kann das Nitroanthrimid salzhaltig als 60 bis 75%ige Ware, wie man sie beim Eindampfen der Anthrimidschmelze erhält oder weitgehend salzfrei als ca. 70 bis 85%ige Ware wie man sie bei der Abtrennung des Lösungsmittels durch Wasserdampfdestillation erhält oder als reine Verbindung eingesetzt werden. Die nach der Carbazolierung erhaltenen Produkte unterscheiden sich nicht im Farbton.

Als Carbazolierungsreagentien dienen vorzugsweise wasserfreies $AlCl_3$ und $TiCl_4$; besonders bevorzugt ist $AlCl_3$. Bevorzugt werden 0,4 bis 1,5 Gew.-Teile $AlCl_3$, besonders bevorzugt 0,6 bis 1,0 Gew.-Teile pro Gew.-Teil eingesetztes Nitroanthrimid verwendet. Als Verdünnungsmittel werden beispielsweise Chinolin und Picolin, bevorzugt jedoch Pyridin in Mengen von 2 bis 5 Gew.-Teilen eingesetzt.

Die Carbazolierungstemperatur liegt vorzugsweise zwischen 100 und 180° C, besonders bevorzugt zwischen 125 und 135° C.

Zur Aufarbeitung können übliche Verfahren dienen, wie Wasserdampfdestillation in Gegenwart von soviel starkem Alkali, dass die Aluminiumsalze in lösliche Aluminate überführt werden und gegebenenfalls anschliessende Schönung des Farbstoffs mit Hypochlorit, Nitrit, Chlorat oder Dichromat. Man kommt aber auch ohne Schönung zu brauchbaren Farbstoffen.

Aus der DE-PS 867724 sind Farbstoffe bekannt, die anstatt der $NO_2$-Gruppe der Farbstoffe der Formel (I) eine Acylamino-Gruppe enthalten. Zur Herstellung dieser Farbstoffe wird 1,4-Dichlor-5-acylamino-anthrachinon als Zwischenprodukt benötigt. Zur Herstellung dieser Verbindung sind ausgehend vom Anthrachinon mindestens vier Reaktionsschritte erforderlich. Das erfindungsgemäss als Zwischenprodukt eingesetzte 1,4-Dichlor-5-nitro-anthrachinon bedarf zu seiner Herstellung ausgehend von Anthrachinon dagegen nur zwei Schritte. Der ökonomische Vorteil ist offensichtlich.

Die Verwendung der Farbstoffe der Formel (I) als Küpenfarbstoffe erfolgt nach üblichen Verfahren. Färbungen mit den Nitroverbindungen weisen ähnliche Echtheiten wie Färbungen mit den Aminoverbindungen auf, obgleich die Färbungen in der Regel nicht völlig identisch sind.

Nitro-anthrimid-carbazole haben bislang wegen zu erwartender geringer Echtheiten keine Anwendung in der Färberei gefunden. Es ist daher überraschend, dass die Farbstoffe der Formel (I) $NO_2$-Gruppen-haltige Küpenfarbstoffe von hohem Echtheitsniveau darstellen. Es ist weiterhin überraschend, dass weitestgehend unabhängig von den Färbebedingungen Färbungen des gleichen Farbtons erhalten werden.

*Beispiel 1*

a) In 200 ml Nitrobenzol werden 34,6 g 1-Aminoanthrachinon 98%ig, 25,0 g 1,4-Dichlor-5-nitro-anthrachinon ca. 80%ig, 8,3 g $Na_2CO_3$ und 0,5 g Kupferpulver eingetragen und verrührt. Die Schmelze wird in 1 Stunde auf 200 bis 205° C erhitzt, 10 Stunden bei dieser Temperatur gehalten und dann im Vakuum bei 130 bis 140° C eingedampft. Man erhält 63,9 g eines dunkelbraunen Pulvers mit einem Restgehalt an organisch gebundenem Chlor von 0,8 bis 1,0%.

b) In 60 ml Pyridin werden bei 50 bis 80° C 12,0 g wasserfreies $AlCl_3$, anschliessend bei 100° C 20,0 g des nach Absatz a) hergestellten Nitrotrianthrimids eingetragen. Unter Abdestillieren von 10 bis 20 ml Pyridin steigert man die Temperatur auf 130° C und hält diese Temperatur 2 Stunden. Die warme Schmelze gibt man in eine Mischung aus 400 ml Wasser und 100 ml 50%ige Natronlauge, destilliert mit Wasserdampf das Pyridin ab und hält nach Zugabe von 30 ml Chlorlauge (ca. 13% an aktivem Chlor) 1 Stunde bei 70° C. Es wird heiss abgesaugt, mit heissem Wasser neutral gewaschen und bei 100° C getrocknet. Man isoliert 16,7 g eines Farbstoffs, dessen Hauptkomponente der Formel (I) entspricht. Er färbt Baumwolle kräftig in rotstichig braunen Tönen mit guten Echtheiten.

c) Verwendet man anstelle von Pyridin Methylpyridine oder Chinolin, so erhält man den Farbstoff mit etwas geringerer Farbstärke.

*Beispiel 2*

a) In 250 ml eines eutektischen Gemischs aus Diphenyl und Diphenylether (ca. 1: 3) werden 25,0 g 1,4-Dichlor-5-nitro-anthrachinon (ca. 80%ig), 33,5 g 1-Amino-anthrachinon (98%ig), 8,6 g $Na_2CO_3$ und 0,5 g Kupferpulver eingetragen. Die Schmelze wird 15 Stunden auf 205° C erhitzt und dann im Vakuum eingedampft. Man erhält 62,8 g Produkt, welches noch 1,4 bis 1,6% organisch gebundenes Chlor enthält.

b) Die Carbazolierung analog Beispiel 1 Abs. b), liefert 16,9 g Farbstoff, der mit dem des Beispiels 1 praktisch identisch ist.

Bei der Carbazolierung kann anstelle des salzhaltigen Nitrotrianthrimids ausgekochtes, von anorganischen Salzen befreites Nitrotrianthrimid ohne Nachteil eingesetzt werden.

*Beispiel 3*

a) In 200 ml Naphthalin werden bei 140° C nacheinander 34,0 g 1-Amino-anthrachinon (98%ig), 8,3 g $Na_2CO_3$, 25,0 g 1,4-Dichlor-5-nitroanthrachinon (ca. 80%ig) und 0,8 g Kupfer-(I)-chlorid eingetragen. Die Schmelze wird 15 Stunden auf 200° C erhitzt. Man lässt auf 130 bis 140° C abkühlen und verdünnt mit 200 ml Toluol. Bei ca. 25° C wird abgesaugt, mit 100 ml Toluol gewaschen und im Vakuum getrocknet. Man isoliert 49,6 g Produkt, das noch 0,2 bis 0,4% organisch gebundenes Chlor enthält.

b) Die Carbazolierung analog Beispiel 1 Abs. b) ergibt 17,4 g Farbstoff, der im Farbton gleich, in der Farbstärke stärker als der des Beispiels 1 ist.

*Beispiel 4*

a) In 300 ml Nitrobenzol werden 35,0 g 1-Aminoanthrachinon 98%ig, 22,0 g 1,4-Dichlor-6-nitro-anthrachinon erhalten nach Abschnitt c), 10,5 g $Na_2CO_3$ und 0,5 g Cu-Pulver eingetragen. Die Schmelze wird 12 Stunden auf 205 bis 210° C erhitzt und dann im Vakuum bei 130 bis 140° C eingedampft. Man erhält 65,3 g eines dunklen Pulvers mit einem Restgehalt an organisch gebundenem Chlor von 0,4 bis 0,6%.

b) In 80 ml Pyridin werden bei 60 bis 80° C 14,0 g $AlCl_3$ bei 100° C, 200 g des nach Absatz a) erhaltenen Trianthrimids, eingetragen. Unter Abdestillieren von 20 bis 30 ml Pyridin bringt man die Schmelze auf eine Siedetemperatur von 135° C und hält diese Temperatur 2 bis 4 Stunden. Die Aufarbeitung entsprechend Beispiel 1 Abs. b) ergibt 17,2 g eines Farbstoffs, der im Farbton etwas von dem des Beispiels 1 abweicht.

c) Zu einer Lösung von 110,0 g 1,4-Dichloranthrachinon in 600 ml 96%iger $H_2SO_4$ werden bei 5 bis 10° C in 2 bis 4 Stunden 80 g einer Mischsäure von 33% $HNO_3$-Gehalt getropft. Man lässt langsam auf Raumtemperatur kommen, rührt noch einige Stunden nach und saugt das ausgeschiedene 1,4-Dichlor-5-nitro-anthrachinon (112,6 g) ab. Die Mutterlauge wird in 2 l Wasser eingerührt. Dann wird abgesaugt, der Nutschkuchen mit Wasser neutral gewaschen und bei 100° C getrocknet. Man isoliert 12,7 g 1,4-Dichlor-6-nitro-anthrachinon.

Eine weitere Herstellungsmethode für 1,4-Dichlor-6-nitro-anthrachinon ist folgende: 2-Nitroanthrachinon wird anstelle einer gleichgrossen Menge 1-Nitroanthrachinon wie in Beispiel 5 der DE-AS 1162252 mit Chlor behandelt, bis ein Chlorgehalt von 21,5% erreicht ist. Nach entsprechender Aufarbeitung erhält man 51 g 1,4-Dichlor-6-nitro-anthrachinon.

*Beispiel 5*

a) In 300 ml Nitrobenzol trägt man 36,0 g 1-Amino-6-chlor-anthrachinon, 25,0 g 1,4-Dichlor-5-nitroanthrachinon ca. 80%ig, 9,2 g $Na_2CO_3$, 0,6 g CuCl und 0,5 g Kupferpulver ein und heizt unter Rühren 16 Stunden auf 200° C. Nach Abdestillieren des Nitrobenzols im Vakuum erhält man 67,2 g eines salzhaltigen Produktes.

b) In 80 ml Pyridin werden bei 60 bis 80° C 13,0 g $AlCl_3$ gelöst. Nach Erhitzen auf 100° C werden 20,0 g des nach Absatz a) erhaltenen Produktes eingetragen und die Schmelze wird unter Abdestillieren von Pyridin auf 135° C erhitzt. Man hält diese Temperatur 4 Stunden, rührt dann die warme Schmelze in eine Mischung aus 1 l Wasser und 180 ml 50%iger Natronlauge ein, destilliert das Pyridin mit Wasserdampf ab und behandelt die Suspension während 1 Stunde mit 30 ml Chlorlauge bei 70° C. Nach dem Absaugen, Neutralwaschen mit heissem Wasser und Trocknen bei 100° C erhält man 18,1 g Farbstoff, der ähnlich dem des Beispiels 1 färbt.

c) Sehr ähnliche Farbstoffe werden erhalten, wenn man anstelle des 1-Amino-6-chlor-anthrachinon Gemische von 1-Amino-6-chlor- und 1-Amino-7-chlor-anthrachinon oder aber reines 1-Amino-7-chlor-anthrachinon einsetzt.

*Beispiel 6*

a) In 250 ml Nitrobenzol wird eine Mischung aus 25,0 g 1,4-Dichlor-5-nitro-anthrachinon ca. 80%ig, 42,0 g 1-Aminoanthrachinon 74%ig, wie man es nach der EP-OS 1087, Beispiel 2b, erhält, 11,5 g $Na_2CO_3$ und 0,5 g Kupferpulver 6 Stunden auf 195 bis 200° C erhitzt, wobei man noch 0,5 g Kupferpulver nachsetzt. Nach Verdünnen mit 50 ml Methanol wird bei Raumtemperatur abgesaugt, mit 50 ml Methanol nachgewaschen und bei 100° C getrocknet. Man erhält 53,6 g Produkt.

b) Nach der Carbazolierung analog Beispiel 1 Abs. b) erhält man einen Farbstoff, der Baumwolle ähnlich dem des Beispiels 1 färbt. Anstelle des 74%igen 1-Aminoanthrachinon kann ohne Nachteil 86,7%iges 1-Aminoanthrachinon, erhalten nach EP-OS 1087, Beispiel 5 b), eingesetzt werden.

*Beispiel 7*

a) In 200 ml Nitrobenzol werden 25,0 g eines Gemisches aus 1,4-Dichlor-5-nitro-anthrachinon und 1,4-Dichlor-6-nitro-anthrachinon, wie man es durch Verpastung des rohen Nitriergemisches nach Beispiel 4 c) und entsprechender Aufarbeitung erhält, 36,0 g 1-Amino-anthrachinon, 9,0 g $Na_2CO_3$ und 1,0 g Kupferpulver eingetragen und verrührt. Die Schmelze wird 12 Stunden auf 200° C erhitzt und dann im Vakuum eingedampft. Man erhält 65 g eines salzhaltigen Produkts.

b) Die Carbazolierung analog Beispiel 1 b) ergibt einen Farbstoff, der in Farbton und Farbstärke ähnlich dem des Beispiels 1 ist.

*Beispiel 8*

a) 0,2 g des nach Beispiel 1 b) erhaltenen Farbstoffs, 0,4 g Natriumdithionit und 1,4 ml NaOH (38%ig) werden bei 50-55° C zu 160 ml Wasser gegeben. Nach 15 Minuten werden 40 ml einer 10%igen Natriumsulfatlösung hinzugefügt. In die so erhaltene Küpe geht man mit 10 g Baumwollgarn ein und färbt bei 50-55° C unter ständiger Bewegung des Garnes 1 Stunde lang. Das Garn wird abgequetscht, 10-15 Minuten an der Luft oxidiert, gespült, mit 0,2%iger Essigsäure in der Kälte 5 Minuten behandelt, erneut gespült, 20 Minuten bei Siedetemperatur geseift, erneut gespült und bei 80° C getrocknet.

Das Garn ist sehr gleichmässig in schokoladebraunem Ton gefärbt.

b) Setzt man in a) statt 0,2 g 0,6 g Farbstoff ein und verdoppelt die Menge an Natriumdithionit, NaOH und $Na_2SO_4$, so erhält man eine tief dunkelbraune Garnfärbung von gutem Echtheitsniveau.

## Patentansprüche

1. Nitro-trianthrimid-carbazole der Formel

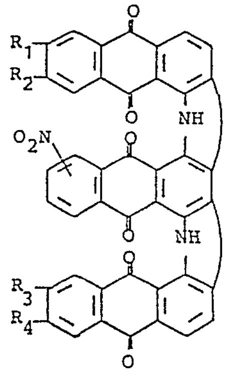

(I)

in der

die $NO_2$-Gruppe in α- oder β-Stellung steht und $R_1$, $R_2$, $R_3$, $R_4$ Wasserstoff oder Halogen wie Chlor und Brom bezeichnen.

2. Verbindung gemäss Anspruch 1, bei der die $NO_2$-Gruppe in α-Stellung steht und $R_1$, $R_2$, $R_3$, $R_4$ Wasserstoff bezeichnen.

3. Verwendung von Verbindungen gemäss den Ansprüchen 1 und 2 als Einzelkomponenten oder in Mischungen als Küpenfarbstoffe.

4. Verfahren zur Herstellung von Verbindungen gemäss Anspruch 1, dadurch gekennzeichnet, dass man Verbindungen der Formel

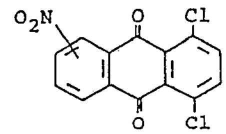

(III)

mit Aminoanthrachinonen der Formeln

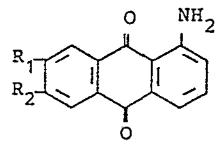

und

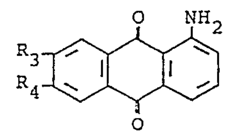

(IVa) (IVb)

in denen

$R_1$, $R_2$, $R_3$, $R_4$ die zu Formel (I) angegebenen Bedeutungen besitzen, in einer Anthrimidschmelze umsetzt und man die erhaltenen Trianthrimide in Gegenwart üblicher Verdünnungsmittel carbazoliert.

## Claims

1. Nitrotrianthrimidecarbazoles of the formula

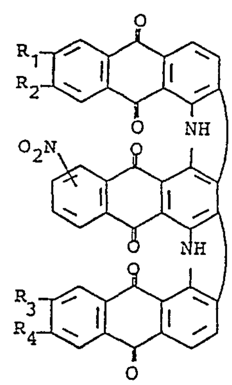

(I)

in which

the $NO_2$ group is in the α- or β-position and $R_1$, $R_2$, $R_3$ and $R_4$ designate hydrogen or halogen, such as chlorine and bromine.

2. Compound according to Claim 1, in which the $NO_2$ group is in the α-position and $R_1$, $R_2$, $R_3$ and $R_4$ designate hydrogen.

3. Use of compounds according to Claims 1 and 2, as individual components or in mixtures, as vat dyestuffs.

4. Process for preparing compounds according to Claim 1, characterized in that compounds of the formula

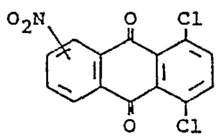

(III)

are reacted with aminoanthraquinones of the formulae

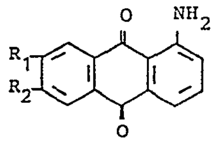

and

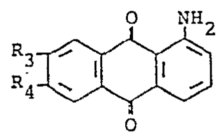

(IVa) (IVb)

in which

$R_1$, $R_2$, $R_3$ and $R_4$ have the meanings indicated for the formula (I)

in an anthrimide melt, and the trianthrimides obtained are carbazolated in the presence of customary diluents.

## Revendications

1. Nitro-trianthrimide-carbazoles de formule

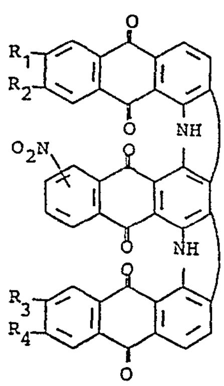

(I)

dans laquelle

le groupe $NO_2$ est en position α ou β et $R_1$, $R_2$, $R_3$, $R_4$ désignent l'hydrogène ou un halogène tel que le chlore et le brome.

2. Composé suivant la revendication 1, dans lequel le groupe $NO_2$ est en position α et $R_1$, $R_2$, $R_3$, $R_4$ désignent l'hydrogène.

3. Utilisation de composés suivant les revendications 1 et 2 comme composants individuels ou en mélanges comme colorants pour cuve.

4. Procédé de production de composés suivant la revendication 1, caractérisé en ce qu'on fait réagir dans une masse fondue d'anthrimide des composés de formule

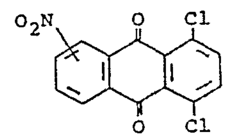

(III)

avec des aminoanthraquinones de formules

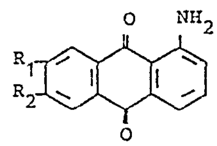

et

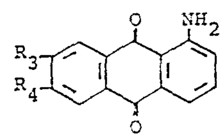

(IVa) (IVb)

dans lesquelles

$R_1$, $R_2$, $R_3$, $R_4$ ont les définitions indiquées pour la formule (I) et on carbazole les trianthrimides obtenus en présence de diluants classiques.